Europäisches Patentamt

European Patent Office

Office européen des brevets

(19)

(11) Numéro de publication : **0 200 632**
**B1**

(12) # FASCICULE DE BREVET EUROPÉEN

(45) Date de publication du fascicule du brevet :
26.04.89

(21) Numéro de dépôt : 86400854.5

(22) Date de dépôt : 21.04.86

(51) Int. Cl.⁴ : **B 60 T 8/18**, B 60 T 13/22,
B 60 T 13/68

(54) **Système de freinage hydraulique pour véhicules ferroviaires.**

(30) Priorité : 22.04.85 FR 8506047

(43) Date de publication de la demande :
05.11.86 Bulletin 86/45

(45) Mention de la délivrance du brevet :
26.04.89 Bulletin 89/17

(84) Etats contractants désignés :
AT BE CH DE GB IT LI LU NL SE

(56) Documents cités :
EP--A-- 0 089 081
DE--A-- 2 140 781
FR--A-- 2 210 532
GB--A-- 1 587 405
US--A-- 2 330 739
US--A-- 3 881 785

(73) Titulaire : **Régie Autonome des Transports Parisiens**
**53 ter, Quai des Grands-Augustins**
**F-75006 Paris (FR)**

**SAB NIFE**
**5 Avenue Caroline**
**F-92215 Saint-Cloud (FR)**

(72) Inventeur : **Roger, Michel**
**12 rue du Gros Chêne**
**F-92370 Chaville (FR)**
Inventeur : **Dufour, Serge**
**33, Avenue de la belle image, Marolies en Brie**
**F-94440 Villecresnes (FR)**
Inventeur : **Harstrom Jan-Ola**
**Drottninggarden 114**
**S-261 24 Landskrona (SE)**

(74) Mandataire : **Rinuy, Santarelli**
**14, avenue de la Grande Armée**
**F-75017 Paris (FR)**

EP 0 200 632 B1

Jouve, 18, rue St-Denis, 75001 Paris, France

## Description

L'invention se rapporte à un système de freinage hydraulique pour véhicule et plus particulièrement pour des véhicules légers sur rails tels que tramways, comprenant au moins un actuateur de frein pour l'application de l'effort de freinage à l'aide d'un groupe de ressorts et le desserrage du frein avec la pression hydraulique, de moyens pour délivrer un fluide hydraulique sous pression et de moyens de contrôle pour relâcher le fluide hydraulique de l'actuateur.

Un système de freinage de ce type est décrit dans la demande de brevet européen EP-A-0 089 081.

Dans un processus de freinage d'urgence, quand ledit système de freinage est utilisé, le fluide hydraulique reçu par l'actuateur pour desserrer le frein est soudainement évacué de l'actuateur pour serrer le frein. Comme conséquence, le véhicule est freiné brutalement, ce qui n'est peut-être pas désiré ou même nécessaire dans certaines circonstances. Il est possible de contrôler l'effet de freinage à l'aide d'un micro-calculateur convenable à condition que l'énergie électrique soit disponible pour une telle commande, mais dans beaucoup de cas le freinage d'urgence est réalisé par rupture d'alimentation électrique, la possibilité de contrôle automatique du frein étant ainsi éliminée.

Le but de l'invention est de fournir un système de freinage pour des véhicules du type référencé ci-dessus où l'action du frein en freinage d'urgence est contrôlée en fonction de la charge du véhicule, même dans le cas où aucune alimentation électrique n'est disponible pour la commande normale de l'action du frein.

Dans ce but, l'invention fournit un système de freinage hydraulique pour les véhicules du type précité qui est caractérisé par un accumulateur de pression connecté audit moyen pour délivrer du fluide hydraulique sous pression et fonction de la charge du véhicule pour maintenir une pression qui, à tout instant, est inversement proportionnelle à ladite charge et des moyens de contrôle de la pression dudit accumulateur pour maintenir dans l'actuateur une pression, qui est égale à ladite pression, quand lesdits moyens de contrôle sont actionnés pour décharger le fluide hydraulique de l'actuateur.

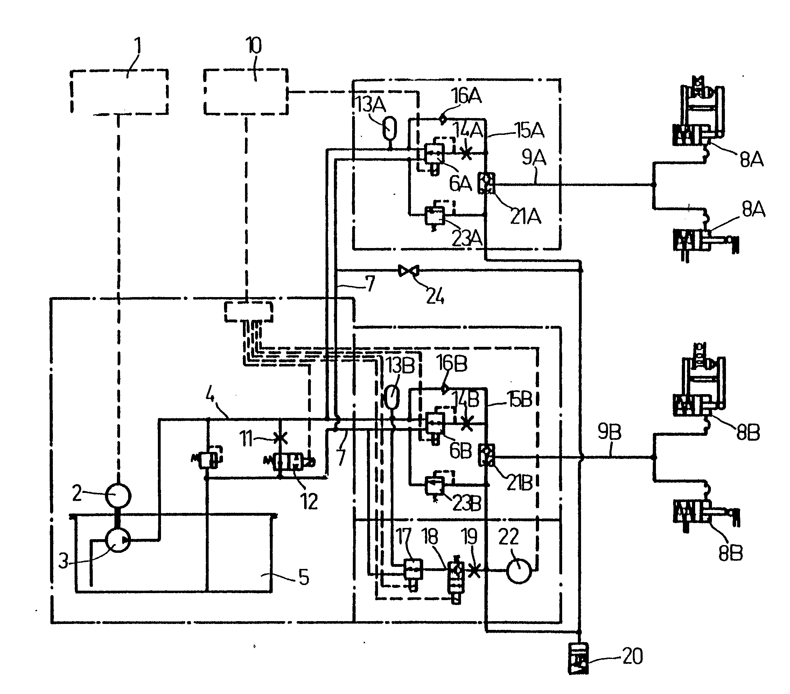

D'autres caractéristiques et avantages de la présente invention ressortiront de la description qui va suivre faite en regard du dessin annexé dont la figure unique montre un schéma fonctionnel d'un circuit selon une forme de réalisation d'un système de frein électro-hydraulique objet de l'invention.

Dans cette forme de réalisation une unité électronique 1 est connectée activement à un moteur électrique 2 qui est connecté à une pompe 3. La pompe transporte du fluide hydraulique au travers d'une conduite 4 à partir d'un réservoir 5 pour un tel fluide vers deux valves à solénoïde 6A et 6B du type valve de régulation de pression ayant une connection de retour 7 vers le réservoir 5.

Quand le solénoïde est désexcité, aucun fluide hydraulique n'est délivré à partir de la valve. Cependant, un petit débit de commande est autorisé à passer au travers de la valve vers la conduite 7, quand la valve est désexcitée, un tel débit est nécessaire pour le fonctionnement de la valve. La valve 6A est disposée pour les actuateurs de frein 8A du premier bogie du véhicule, alors que l'autre valve 6B est disposée pour les actuateurs de frein 8B du second bogie du véhicule, lesdits actuateurs comprenant des timoneries de frein à disque du type à application par ressort et desserrage hydraulique, connu en soi, les connexions entre la valve 6A et les actuateurs 8A d'une part et la valve 6B et les actuateurs 8B d'autre part, étant réalisées respectivement par les conduites 9A et 9B.

Le solénoïde de chaque valve est électriquement connecté à une centrale 10, qui peut être actionnée manuellement par exemple au moyen d'un levier de commande.

Une pompe 3 est entraînée par un moteur 2 commandé par une unité électronique 1, pour fournir une pression hydraulique constante. La pression hydraulique délivrée par chaque valve à solénoïde 6A et 6B, est ajustée au moyen d'une centrale 10 qui règle le courant passant dans le solénoïde de la valve considérée, en fonction des demandes de freinage.

De la conduite 4 une connexion est établie vers la conduite de retour 7, communiquant avec le réservoir 5 au travers d'un orifice calibré 11 et une valve de sécurité 12 du type à solénoïde, ladite valve étant ouverte quand elle est désexcitée. En conséquence le solénoïde est connecté à la centrale 10 pour être mis sous tension en fonctionnement normal pour la fermeture de la valve.

Deux accumulateurs 13A et 13B sont connectés à la conduite 4 et placés respectivement à l'entrée des valves 6A et 6B. Avantageusement ils sont de type hydropneumatique.

Chaque conduite de sortie 9A et 9B, comporte un orifice calibré 14A et 14B. Ces conduites 9A et 9B sont connectées à la conduite 7 en aval dudit orifice calibré par un shunt 15A et 15B. Un clapet anti-retour 16A et 16B est placé sur ledit shunt et laisse passer le fluide de la conduite 9A et 9B, vers la conduite 4 mais empêche le mouvement du fluide dans la direction opposée.

De plus amples détails dans le système de freinage hydraulique sont décrits dans le brevet européen précité.

Les différentes conditions de fonctionnement du système de freinage hydraulique ont été décrites dans ledit brevet. La force de freinage est contrôlée en délivrant du fluide hydraulique sous pression régulée par les valves 6A et 6B. Dans un mode de freinage d'urgence le système de freinage hydraulique est mis hors-tension, la valve de sécurité 12 établit une connexion entre les conduites 4 et 7 (la position de la valve 12 représentée sur le dessin) et les clapets anti-retours 16A et 16B relient les actuateurs au réservoir.

Ainsi dans ces conditions la force de freinage maximum est appliquée par les actuateurs 8A et 8B par l'intermédiaire des ressorts, et le véhicule est brutalement freiné, particulièrement si sa charge est faible.

La disposition de l'invention élimine cet inconvénient en donnant une force de freinage qui est ajustée à la charge du véhicule.

Pour cela, une valve à solénoïde 17, alimentée par la conduite 4 et reliée à la conduite de retour 7, est pilotée par la centrale 10 de manière à maintenir à sa sortie une pression hydraulique qui est inversement proportionnelle à la charge du véhicule.

Une valve 18 connecte la sortie de la valve 17 à l'accumulateur 20 au travers de l'orifice calibré 19 lors de la mise sous tension. Elle interrompt la connexion lors de la mise hors-tension afin d'empêcher le débit de fluide de l'accumulateur 20 vers le réservoir 5 au travers de la valve 17.

Le but de l'orifice calibré 19 est d'atténuer les oscillations dans le système de freinage hydraulique quand l'accumulateur 20 est rempli et permettre la fermeture de la valve 18 avant qu'une quantité importante de fluide hydraulique ne soit admise à s'évacuer de l'accumulateur en freinage d'urgence.

L'accumulateur 20 est relié aux conduites 9A et 9B respectivement par des clapets bidirectionnels 21A et 21B.

Les clapets bidirectionnels 21A et 21B sont commandés par la pression dominante délivrée soit par les valves 6A et 6B, soit par l'accumulateur 20. Lors d'un freinage d'urgence la commande électrique du système de freinage hydraulique est mise hors-tension et la pression délivrée par les valves 6A et 6B chute. La pression régnant dans l'accumulateur 20 maintient alors dans les actuateurs 8A et 8B une force de freinage ajustée à la charge momentanée du véhicule.

Dès l'apparition d'un signal électrique aux valves 6A et 6B, les actuateurs 8A et 8B sont à nouveau alimentés à la pression délivrée par 6A et 6B au travers des clapets bidirectionnels 21A et 21B.

Un capteur de pression 22 est connecté à l'accumulateur 20 dans des buts d'indication et de mesure mais peut être aussi utilisé pour contrôler les valves 17 et 18 d'un autre type que celles utilisées dans la version représentée et décrite ci-après.

Entre l'accumulateur 20 et la conduite 7, des valves 23A et 23B sont disposées en parallèle avec les valves 6A et 21A et les valves 6B et 21B.

Ces valves 23A et 23B sont des valves de limitation de pression empêchant la pression de dépasser une valeur maximale prédéterminée au dessus de laquelle les valves sont ouvertes pour relier directement l'accumulateur à la conduite 7 et ainsi vers le réservoir 5.

Pour les travaux d'entretien et de réparation il est nécessaire, pour des raisons de sécurité, de relâcher la pression hydraulique du système avant que tout travail ne soit entrepris. Ceci peut être réalisé à l'aide d'une valve 24 reliant l'accumulateur directement avec la conduite 7 et ainsi vers le réservoir. La valve 24 doit être commandée manuellement mais peut comprendre aussi un orifice calibré qui vide automatiquement l'accumulateur 20 après une période prédéterminée par exemple 15 minutes, si aucun fluide hydraulique n'est délivré au travers de la valve 17 vers l'accumulateur.

## Revendications

1. Système de freinage hydraulique pour véhicule, particulièrement pour véhicules légers sur rails, comprenant au moins un actuateur de frein (8A 8B) pour appliquer l'effort de freinage par l'intermédiaire d'un groupe de ressorts et desserrer le frein avec une pression hydraulique, des moyens (2, 3) pour délivrer du fluide hydraulique sous pression à l'actuateur et des moyens de contrôle (12, 6A, 6B) de la pression du fluide hydraulique dans l'actuateur, caractérisé par le fait qu'il comprend, en outre, un accumulateur (20) relié, d'une part, auxdits moyens (2, 3) pour délivrer du fluide hydraulique sous pression par l'intermédiaire de moyens (17, 18, 19) pour régler la pression dans l'accumulateur à une valeur sensiblement inversement proportionnelle à la charge du véhicule, et d'autre part, auxdits actuateurs (8A, 8B) par des moyens (21A, 21B) commandés par la pression dudit accumulateur quand lesdits moyens de contrôle (12, 6A, 6B) sont activés pour relâcher le fluide hydraulique de l'actuateur (8A, 8B).

2. Système de freinage hydraulique selon la revendication 1, caractérisé par le fait que l'accumulateur de pression (20) est relié aux moyens (2, 3) pour délivrer du fluide hydraulique sous-pression au travers d'une valve de régulation de pression (17) commandée par une centrale (10) qui émet un signal représentatif de la charge du véhicule.

3. Système de freinage hydraulique selon la revendication 2, caractérisé par le fait que la valve de régulation (17) est reliée à l'accumulateur (20) par ladite centrale (10), au travers d'une valve deux voies (18) commandée extérieurement.

4. Système de freinage hydraulique selon l'une quelconque des revendications 1 à 3, caractérisé par le fait que les moyens (21A, 21B) commandés par la pression de l'accumulateur (20) comprennent un clapet bidirectionnel hydraulique.

5. Système de freinage hydraulique selon l'une quelconque des revendications 1 à 4 caractérisé par le fait qu'une valve de limitation de la pression maximale (23A, 23B) est reliée à l'accumulateur (20).

6. Système de freinage hydraulique selon l'une quelconque des revendications 1 à 5 caractérisé par le fait qu'une valve (24) est reliée à l'accumulateur (20) pour évacuer le fluide hydraulique.

## Claims

1. A hydraulic brake system for vehicles, particularly light rail vehicles, comprising at least one brake actuator (8A, 8B) to apply the braking force by means of a group of springs and to disengage the brake by hydraulic pressure, means (2, 3) for supplying pressurized hydraulic fluid to the actuator and means (12, 6A, 6B) for controlling the pressure of the hydraulic fluid in the actuator, characterized in that it also comprises an accumulator (20) connected, on the one hand, to the said means (2, 3) for supplying pressurized hydraulic fluid by the intermediation of means (17, 18, 19) to adjust the pressure in the accumulator to a value which is substantially inversely proportional to the load of the vehicle, and, on the other hand, to the said actuators (8A, 8B) through means (21A, 21B) controlled by the pressure of the said accumulator when the said control means (12, 6A, 6B) are activated to release hydraulic fluid from the actuator (8A, 8B).

2. A hydraulic brake system according to Claim 1, characterized in that the pressure accumulator (20) is connected to the means (2, 3) for supplying pressurized hydraulic fluid through a pressure regulating valve (17) controlled by a controller (10) which produces a signal representing the load of the vehicle.

3. A hydraulic brake system according to Claim 2, characterized in that the pressure regulating valve (17) is connected to the accumulator (20) by the said controller (10) through an externally controlled two-channel valve (18).

4. A hydraulic brake system according to any one of Claims 1 to 3, characterized in that the means (21A, 21B) controlled by the pressure of the accumulator (20) comprise a hydraulic shuttle valve.

5. A hydraulic brake system according to any one of Claims 1 to 4, characterized in that a maximum pressure release valve (23A, 23B) is connected to the accumulator (20).

6. A hydraulic brake system according to any one of Claims 1 to 5, characterized in that a valve (24) is connected to the accumulator (20) to empty the hydraulic fluid.

## Patentansprüche

1. Hydraulisches Bremssystem für Fahrzeuge, insbesondere für leichte Schienenfahrzeuge, mit wenigstens einem Bremsbetätiger (8A, 8B), um den Bremsdruck über eine Gruppe von Federn aufzubringen und um die Bremse mittels hydraulischem Druck zu lösen, mit Mitteln (2, 3) zur Zufuhr von Hydraulikfluid unter Druck zum Bremsbetätiger und mit Mitteln (12, 6A, 6B) zur Steuerung des Drucks des Hydraulikfluids im Bremsbetätiger, dadurch gekennzeichnet, daß es überdies einen Druckspeicher (20) aufweist, welcher einerseits mit den Mitteln (2, 3) zur Zufuhr von Hydraulikfluid unter Druck über Mittel (17, 18, 19) zur Regelung des Druckes im Druckspeicher (20) auf einen im wesentlichen der Belastung des Fahrzeuges umgekehrt proportionalen Wert und andererseits mit dem Bremsbetätiger (8A, 8B) über Mittel (21A, 21B) verbunden ist, die über den Druck des Druckspeichers betätigt werden, sobald die Steuermittel (12, 6A, 6B) aktiviert werden, um das Hydraulikfluid aus dem Bremsbetätiger (8A, 8B) auszulassen.

2. Hydraulisches Bremssystem nach Anspruch 1, dadurch gekennzeichnet, daß der Druckspeicher (20) mit den Mitteln (2, 3) zur Zufuhr von Hydraulikfluid unter Druck über ein Druckregelventil (17) verbunden ist, welches von einer Zentrale (10) gesteuert ist, welche ein der Belastung des Fahrzeuges entsprechendes Signal abgibt.

3. Hydraulisches Bremssystem nach Anspruch 2, dadurch gekennzeichnet, daß das Regelventil (17) von der Zentrale (10) über ein von außen betätigtes Zweiwegeventil (18) an den Druckspeicher (20) angeschaltet wird.

4. Hydraulisches Bremssystem nach einem der Ansprüche 1 bis 3, dadurch gekennzeichnet, daß die über den Druck im Druckspeicher (20) betätigten Mittel (21A, 21B) ein hydraulisches Zweirichtungs-Sperrventil aufweisen.

5. Hydraulisches Bremssystem nach einem der Ansprüche 1 bis 4, dadurch gekennzeichnet, daß mit dem Druckspeicher (20) ein Maximaldruck-Begrenzerventil (23A, 23B) verbunden ist.

6. Hydraulisches Bremssystem nach einem der Ansprüche 1 bis 5, dadurch gekennzeichnet, daß mit dem Druckspeicher (20) ein Ventil (24) verbunden ist, um das Hydraulikfluid abzulassen.